# EUROPÄISCHE PATENTSCHRIFT

(11) **EP 2 689 703 B1**
(45) Veröffentlichungstag und Bekanntmachung des Hinweises auf die Patenterteilung: **25.11.2015**
(21) Anmeldenummer: 13165365.1
(22) Anmeldetag: 25.04.2013
(51) Int. Cl.: A47L 9/12, A47L 9/20

(54) **Staubabscheideeinheit mit einer Siebabreinigung**
Dust extraction unit with filter cleaning
Unité de dépoussiérage avec nettoyage du filtre

(30) Priorität: 03.05.2012 DE 102012207353
(43) Veröffentlichungstag der Anmeldung: 29.01.2014
(73) Patentinhaber: BSH Hausgeräte GmbH, 81739 München (DE)
(72) Erfinder: Balling, Florian, 97616 Bad Neustadt (DE); Kastner, Julian, 97656 Oberelsbach (DE); Schmitt, Florian, 97702 Münnerstadt (DE); Walter, Thomas, 97657 Sandberg (DE)

(56) Entgegenhaltungen:
- EP-A1- 1 752 076
- EP-A1- 2 225 993
- WO-A1-2007/117196
- WO-A2-03/030702
- DE-A1- 10 035 253
- JP-A- 2005 013 312
- US-A- 3 358 316

## Beschreibung

### Gebiet der Erfindung

Die Erfindung betrifft eine Staubabscheideeinheit für einen Staubsauger, die eine Lufteinströmöffnung und eine Luftausströmöffnung umfasst und die eine gegenüber der Staubabscheideeinheit drehbar gelagerte Siebstruktur zur Entfernung von Stäuben aus der eingeströmten Luft umfasst, wobei die Siebstruktur einen Innenraum formt, und in dem Innenraum mindestens ein Luftführungsmittel umgibt, das mit der Siebstruktur rotationsgekoppelt ist.

Die Erfindung betrifft zudem einen Staubsauger mit einer solchen Staubabscheideeinheit, ein Verfahren zum Abreinigen einer Siebstruktur einer Staubabscheideeinheit für einen Staubsauger sowie die Verwendung eines Luftführungsmittels umfassend einen Apexkegel in einer Staubabscheideeinheit für einen Staubsauger zum Abreinigen einer Siebstruktur.

### Hintergrund der Erfindung

Aus der US 2006/0137301 A1 ist ein Staubsammelbehälter für einen Staubsauger bekannt, bei dem ein Staubfangnetz im Strömungsbereich der Saugluft vorhanden ist. Wenn Luft von einer Lufteinströmöffnung zu einer Luftausströmöffnung fließt, rotiert eine Mehrzahl von Staubpinseln, um damit das Netz abzureinigen und Staub davon zu entfernen. Dies erlaubt, dass Luft unbehindert durch das Netz fließen kann.

Die Offenlegungsschrift DE 103 03 678 A1 zeigt eine Staubsammelvorrichtung vom Wirbelungstyp für einen Staubsauger. Eine Gitterreinigungseinrichtung umfasst eine Gitterdreheinrichtung zum Drehen des Gitters während der Staubsauger in Gebrauch ist und ein längs einer Seite des inneren Wirbelungskörpers angeordnete Entstaubungsglied um den Außenumfang des sich drehenden Gitters zu berühren. Die Gitterdreheinrichtung weist ein Drehglied auf, welches neben der Oberseite des Wirbelungskörpers angeordnet ist, um das Gitter im Bezug auf den Wirbelungskörper drehbar zu tragen und zusammen mit dem Gitter zu drehen, wobei es mit dem Gitter durch eine Anzahl von Verbindungsglieder verbunden ist und wobei die Oberseite des Wirbelungskörpers ausschließlich des Luftabführanschlusses dazwischen positioniert ist, und versehen ist mit einem Zahnradbereich, der um den äußeren Umfang gebildet ist. Eine Antriebsquelle stellt eine Antriebskraft zur Drehung des Drehgliedes bereit, und eine Kraftübertragungseinrichtung dient zur Kraftübertragung von der Antriebsquelle auf das Drehglied.

Die EP 1 752 076 A1 offenbart die Verwendung eines Luftführungsmittels; darüber hinaus offenbaren auch die US 3 358 316 A, die JP 2005 13312 A, die WO 2007/117196 A1 und die EP 2 225 993 A1 ganz oder teilweise gattungsbildende Staubabscheideeinheiten für Staubsauger.

Die Offenlegungsschrift DE 100 35 253 A1 offenbart einen Staubsauger und insbesondere einen Staubsauger mit einem Schmutzsammelabschnitt vom Zyklontyp. Auf einem inneren Umfang eines Filters sind Drehflügel angeordnet. Die Drehflügel helfen, dass der Filter durch eine Luftströmung effizient gedreht wird. Der Filter ist ein drehbares Element, das unterhalb eines Luftauslasses des äußeren Gehäuses über den Drehlagerabschnitt montiert ist. Der Filter weist eine zylindrische Struktur auf, die ein geschlossenes Ende aufweist, und weist eine Vielzahl von Luftlöchern auf, die entlang des äußeren Umfangs ausgebildet sind, zum effizienten Auslassen der Luft, während größere Schmutz- und Staubteilchen blockiert werden. Vorzugsweise ist ein Faservlies am äußeren Umfang des Filters zum Verhindern des Austritts von sehr kleinen Schmutz- oder Staubteilchen durch die Luftlöcher hindurch befestigt. Durch die Bewegung der Luft, die durch den Führungskanal einströmt, wird gleichzeitig der Filter gedreht und folglich wird verhindert, dass Schmutz und Staub am äußeren Umfang des Filters anhaften, und die Filterwirkung des Filters wird maximiert.

Schließlich sei noch auf die WO 03/030702 A2 hingewiesen.

### Der Erfindung zugrundeliegende Aufgabe

Der Erfindung liegt die Aufgabe zugrunde, eine Staubabscheideeinheit für einen Staubsauger zu schaffen, die gegenüber dem Stand der Technik verbessert ist, einen verbesserten Staubsauger bereitzustellen, ein Luftführungsmittel einer neuen Verwendung zuzuführen, und verbesserte Verfahren zum Abreinigen einer Siebstruktur einer Staubabscheideeinheit für einen Staubsauger bereitzustellen.

### Erfindungsgemäße Lösung

Die Bezugszeichen in sämtlichen Ansprüchen haben keine einschränkende Wirkung, sondern sollen lediglich deren Lesbarkeit verbessern.

Die der Erfindung zugrundeliegende Aufgabe wird erfindungsgemäß gelöst durch eine Staubabscheideeinheit nach Anspruch 1, ein Verfahren nach Anspruch 16 und eine Verwendung nach Anspruch 17.

Ein Staubsauger im Sinne der Erfindung ist ein Haushaltsgerät zum Reinigen von Zimmern von Staubablagerungen. Ein solcher Staubsauger kann sowohl ein Kanisterstaubsauger sein, der einen Saugschlauch umfasst und auf dem Untergrund entlang gezogen werden kann, als auch ein Stabstaubsauger, der üblicherweise eine Saugdüse, ein Saugrohr und daran unmittelbar angeschlossen ein Gehäuse mit einem Staubsammelraum aufweist, oder ein Standstaubsauger, der zusätzlich noch auf der Saugdüse abstellbar ist.

Eine Staubabscheideeinheit im Sinne der Erfindung arbeitet nach dem Zentrifugalprinzip und kann z.B. ein Wirbelrohrabscheider sein. In der nach dem Zentrifugalprinzip arbeitenden Staubabscheideeinheit rotiert Luft, die durch den Sauglufteinlass in den Staubabscheideeraum der Staubabscheideeinheit eintritt, auf einer schraubenförmigen Bahn durch den Staubabscheideraum, wobei aufgrund der Zentrifugalkraft ein Staubanteil der Saugluft aus dieser abgetrennt wird und den Staubabscheideraum durch eine Staubauswurföffnung verlässt. Durch die Staubauswurföffnung gelangt der Staubanteil gewöhnlich in eine Staubsammelbox die den Staub sammelt und entleert werden kann. Die von dem Staubanteil befreite Saugluft verlässt den Staubabscheideraum durch ein Tauchrohr, das mit der Luftauslassöffnung verbunden ist. Das Tauchrohr weist zum Luftdurchlass zumindest in einem Teil eine Siebstruktur auf. Dem Tauchrohr kann ein weiteres Filter nachgeschaltet sein, z.B. ein Gebläseschutzfilter. Die Vorteile der nach dem Zentrifugalprinzip arbeitenden Staubabscheideeinheiten bestehen insbesondere in ihrem einfachen Konstruktionsprinzip und einer platzsparenden Bauweise. Beides zusammen ermöglicht bei der Konstruktion eines Staubsaugers eine besonders große Gestaltungsfreiheit. So kann die nach dem Zentrifugalprinzip arbeitende Staubabscheideeinheit bei geeigneter Ausgestaltung stehend, liegend oder auch schräg in den Staubsauger eingebaut werden, ohne dass dies notwendigerweise Einbußen in der Staubabscheideleistung nach sich zieht. Auch ist eine nach dem Zentrifugalprinzip arbeitende Staubabscheideeinheit einfach skalierbar, was die Entwicklung und Konstruktion einer Serie von Staubsaugern mit unterschiedlicher Leistung erleichtert. Mit Tauchrohr ist im Sinne der vorliegenden Erfindung eine Struktur gemeint, die bis auf die Siebstruktur und die mit der Luftauslassöffnung verbundene Seite eine geschlossene Oberfläche aufweist und auf der Innenseite luftdurchlässig ist.

Ein Apexkegel im Sinne der vorliegenden Erfindung ist ein sich in einer Richtung verjüngendes Gebilde, an dem die Saugluftentlang gleiten kann. Zum Beispiel kann der Apexkegel als gerader oder schiefer Kegel oder Kegelstumpf ausgebildet sein. Ein Apexkegel im Sinne der vorliegenden Erfindung muss also nicht notwendigerweise spitz zulaufen. Auch muss die Mantellinie nicht notwendigerweise eine Gerade sein, sondern sie kann auch zur Achse des Apexkegels hin konkav oder von der Achse weg konvex gekrümmt sein. Der Apexkegel kann die Luft eines Außenwirbels des Wirbelrohrabscheiders besonders effektiv in einen Innenwirbel zum Saugluftauslass hin umlenken. Ein bevorzugter Apexkegel ist im Wesentlichen rotationssymmetrisch.

Ein Luftführungsmittel im Sinne der Erfindung ist ein solches Mittel, das geeignet ist, strömende Luft auf einen gewünschten Pfad zu leiten. Unter Abklopfen versteht man im Sinne der Erfindung, dass das Luftführungsmittel derart mit der Siebstruktur in mechanischer Wechselwirkung durch stoßartiges Berühren steht, dass die Siebstruktur durch das Luftführungsmittel in Vibration versetzt wird, und dadurch Staub von der Siebstruktur gelöst werden kann. Dies unterscheidet sich von anderen Verfahren, bei denen Staub beispielsweise durch kontinuierliches Abfegen von der Siebstruktur gelöst wird.

Durch die erfindungsgemäße Staubabscheideeinheit kann der Vorteil erreicht werden, dass Stäube von der Siebstruktur besonders einfach gelöst werden können. Das Luftführungsmittel kann die Siebstruktur abklopfen, sodass von außen am Sieb anhaftender Staub gelöst werden kann.

Umfasst die erfindungsgemäße Staubabscheideeinheit gemäß Anspruch 1 ein Luftführungsmittel mit einem Apexkegel, das mit der Siebstruktur rotationsgekoppelt ist, so kann der Vorteil erreicht werden, dass durch die Rotation der drehbar gelagerten Siebstruktur mit Hilfe der Zentrifugalkraft Staub von der Siebstruktur besonders einfach gelöst werden kann.

Ein erfindungsgemäßes Verfahren zum Abreinigen einer Siebstruktur kann entweder den Vorteil haben, dass das rotierende Luftführungsmittel die Siebstruktur abklopfen kann oder sie, falls sie mit der Siebstruktur rotationsgekoppelt ist, in eine schnelle Rotation zu versetzen. In beiden Fällen kann besonders einfach Staub von der Siebstruktur gelöst werden. Dies geschieht dann entweder mechanisch durch Abklopfen oder mit Hilfe der durch die Rotation erzeugten Zentrifugalkraft.

Wird erfindungsgemäß ein Luftführungsmittel umfassend einen Apexkegel zum Abreinigen einer Siebstruktur verwendet, kann der Reinigungseffekt besonders stark ausgeprägt sein. Ein Luftführungsmittel mit einem Apexkegel kann den Vorteil haben, dass besonders hohe Rotationsgeschwindigkeiten erreicht werden können, sodass eine besonders gute Abreinigung der Siebstruktur erfolgen kann.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

In einer bevorzugten Ausführungsform ist das Luftführungsmittel drehbar gegenüber der Staubabscheideeinheit gelagert und mit Hilfe von Saugluft in eine Drehung um die eigene Längsachse versetzbar. Das kann sich vorteilhaft auf das Abklopfen der Siebstruktur auswirken, weil die Mittel zum Abklopfen dann während der Rotationsbewegung das Sieb in Vibration versetzen können. Besonders bevorzugt ist, dass zusätzlich die Siebstruktur drehfest gegenüber der Staubabscheideeinheit gelagert ist. Ist die Siebstruktur drehfest gegenüber der Staubabscheideeinheit gelagert und das Luftführungsmittel drehbar gegegenüber der Staubabscheideeinheit gelagert, so kann der Vorteil erreicht werden, dass die Siebstruktur den Mitteln zum Abklopfen der Siebstruktur einen besonders starken Widerstand entgegensetzen kann, sodass das Abklopfen besonders effektiv erfolgen kann. Dadurch, dass das Luftführungsmittel mit Hilfe von Saugluft in eine Drehung um die eigene Längsachse versetzbar ist, kann der Vorteil erreicht werden, dass auf elektrische oder andere Antriebe für das Luftführungsmittel verzichtet werden kann. So kann eine sparsame und einfach zu realisierende Möglichkeit zum Abklopfen der Siebstruktur bereitgestellt werden.

In einer bevorzugten Ausführungsform steht das mindestens eine Mittel zum Abklopfen der Siebstruktrur radial aus dem Luftführungsmittel hervor. Das kann den Vorteil haben, dass das Luftführungsmittel besonders einfach herzustellen ist. Auch kann ein Mittel zum Abklopfen der Siebstruktur, das radial aus dem Luftführungsmittel hervorsteht, aufgrund seiner Positionierung besonders gut mit der Siebstruktur interagieren. Alternativ kann das Mittel aber auch anders als radial aus dem Luftführungsmittel hervorstehen, beispielsweise um einen Winkel geneigt. Es kann sowohl mit der Innen- als auch mit der Außenseite der Siebstruktur interagieren, um diese in Vibration zu versetzen.

In einer bevorzugten Ausführungsform ist das mindestens eine Mittel zum Abklopfen der Siebstruktur ein Steg. Dies stellt eine besonders einfache Möglichkeit dar, an einem Luftführungsmittel ein Mittel zum Abklopfen der Siebstruktur bereitzustellen. Der Steg kann beispielsweise aus Kunststoff gefertigt sein, vorzugsweise aus dem gleichen Material aus dem auch das Luftführungsmittel selbst hergestellt worden ist. Entsprechend kann das Mittel zum Abklopfen auch einstückig mit dem Luftführungsmittel ausgeführt sein. In einer bevorzugten Ausführungsform ist der Steg einstückig mit dem Luftführungsmittel verbunden. Dies kann beispielsweise durch Anspritzen oder gemeinsames Gießen erfolgt sein.

In einer bevorzugten Ausführungsform weist die Siebstruktur an ihrer inneren Umfangslinie mindestens ein Kontaktierungsmittel auf, das in den Innenraum der Siebstruktur hineinreicht. In einer anderen bevorzugten Ausführungsform weist die Siebstruktur an ihrer äußeren Umfangslinie mindestens ein Kontaktierungsmittel auf, das radial nach außen von der Siebstruktur absteht. In beiden Fällen kann der Vorteil erreicht werden, dass das Mittel zum Abklopfen der Siebstruktur am Luftführungsmittel besonders gut mit der Siebstruktur interagieren kann, um diese in Vibration zu versetzen. Dadurch kann eine besonders gute Abreinigung des Siebes erfolgen.

In einer besonders bevorzugten Ausführungsform ist das mindestens eine Kontaktierungsmittel der Siebstruktur so lang, dass es das mindestens eine Mittel des Luftführungsmittels zum Abklopfen der Siebstruktur berühren kann. Es kann von besonderem Vorteil sein, wenn diese beiden Elemente der Siebstruktur und des Luftführungsmittels miteinander interagieren, um dadurch die Entstaubung der Siebstruktur erreichen zu können. Beispielsweise kann das Mittel am Luftführungsmittel eine Länge haben, die es erlaubt, die Siebstruktur von außen abzuklopfen, indem sie mit an der äußeren Umfangslinie der Siebstruktur angeordneten Kontaktierungsmitteln interagiert. Die Kontaktierungsmittel an der Siebstruktur können aber auch eine solche Länge haben, die es den Mitteln am Luftführungsmittel erlaubt, die Siebstruktur an ihrer Innenseite abzuklopfen.

In einer bevorzugten Ausführungsform einer Staubabscheideeinheit, bei der die Siebstruktur mit dem Luftführungsmittel rotationsgekoppelt ist, ist das Luftführungsmittel mit Hilfe der Saugluft in eine Drehung um die eigene Längsachse versetzbar. Daraus kann sich der Vorteil ergeben, dass das in Drehung versetzbare Luftführungsmittel gleichzeitig auch die Siebstruktur in Drehung versetzt und somit durch die Zentrifugalkraft Stäube von der Siebstruktur gelöst werden können. Somit ist eine Entstaubung des Siebes möglich und der Luftfluss durch das Sieb bleibt gleichbleibend gut. Bevorzugt ist das Luftführungsmittel mindestens zweistückig mit der Siebstruktur rotationsgekoppelt verbunden. Besonders bevorzugt ist die Kopplung direkt, so dass die Siebstruktur mit gleicher Winkelgeschwindigkeit und in die gleiche Richtung wie das Luftführungsmittel rotiert. Alternativ kann ein Getriebe zwischen Luftführungsmittel und Siebstruktur geschaltet sein, so dass die Siebstruktur mit einer größeren oder einer kleineren Geschwindigkeit gegenüber dem Luftführungsmittel rotiert oder auch entgegen der Rotationsrichtung des Luftführungsmittels rotiert. Nochmals besonders bevorzugt ist das Luftführungsmittel einstückig mit der Siebstruktur rotationsgekoppelt verbunden.

In einer bevorzugten Ausführungsform ist das Luftführungsmittel eine Durchdringungsfigur, bei der der Apexkegel von zwei Luftleitflächen, die senkrecht zueinander angeordnet sind, parallel zu seiner Längsachse durchdrungen wird. Dies kann die Rotation des Luftführungsmittels besonders positiv beeinflussen. Die zwei Luftleitflächen können beispielsweise in einer Aufsicht entlang der Längsachse des Apexkegels ein kreuzförmiges Profil aufweisen. Dabei müssen die beiden Luftleitflächen nicht zwingend ein solches kreuzartiges Profil aufweisen, dass sie in einem Winkel von 90° zueinander orientiert sind, sondern sie können auch einen Winkel zwischeneinander einschließen, der von 90° abweicht, beispielsweise 120° beträgt oder 80° beträgt oder Werte dazwischen aufweist. Die Anwesenheit der beschriebenen Luftleitflächen kann dazu führen, dass der Apexkegel und das Luftführungsmittel insgesamt besonders gut durch vorbeiströmende Saugluft angetrieben werden können.

In einer bevorzugten Ausführungsform ist die Siebstruktur kreiszylindrisch rohrförmig geformt. Dies kann besonders vorteilhaft sein um ein besonders einfaches Abklopfen der Siebstruktur zu ermöglichen. Alternative Ausführungsformen sind aber auch denkbar, z.B. kann der Zylinder auch eckig sein, z.B. quaderförmig oder vieleckig, z.B. fünf-, sechs- oder achteckig.

In einer bevorzugten Ausführungsform ist die Siebstruktur mit Verstärkungsrippen versehen. Dies kann zum einen erlauben, dass die Siebstruktur an Festigkeit gewinnt, zum anderen eine einfache Möglichkeit bieten, die Siebstruktur mit Kontaktierungsmitteln zu versehen. Die Verstärkungsrippen können nämlich Kontaktierungsmittel tragen. So kann beispielsweise das Sieb auf der Siebstruktur von der Siebstruktur gelöst werden, während die Verstärkungsrippen mit den Kontaktierungsmitteln in der Siebstruktur verbleiben. Ein Austausch des Siebes oder des Vlieses ist damit möglich.

In einer bevorzugten Ausführungsform ist die Siebstruktur an einem Tauchrohr gelagert. Dadurch kann der Siebstruktur eine besondere Stabilität innerhalb der Staubabscheideeinheit ermöglicht werden. Zudem kann so verhindert werden, dass sich zwischen Siebstruktur und Tauchrohr staubbeladene Luft hindurchbewegt, die dann wieder in die Umgebungsluft abgegeben wird. Die Reinigungsleistung des Staubsaugers kann also dadurch verbessert sein.

In einer bevorzugten Ausführungsform ist die Siebstruktur an einer abnehmbaren Verschlusskappe der Staubabscheideeinheit gelagert. Das kann den Vorteil haben, dass die Siebstruktur mit der abnehmbaren Verschlusskappe aus der Staubabscheideeinheit entfernt werden kann, um anschließend das Sieb entweder von Hand zu reinigen oder zu ersetzen, falls es beschädigt sein sollte.

In einer bevorzugten Ausführungsform sind die Siebstruktur und das Luftführungsmittel am gleichen Ende der Staubabscheideeinheit koaxial zueinander gelagert. So kann das Luftführungsmittel den Vorteil haben, dass es nicht nur die Siebstruktur abreinigt, entweder durch Abklopfen oder durch in Rotation versetzen der Siebstruktur, sondern gleichzeitig auch noch durchströmende Saugluft verbessert in Richtung Luftausströmöffnung lenken kann. Dadurch können beispielsweise Strömungseigenschaften der Staubabscheideeinheit verbessert werden, was zu einer verbesserten Akustik und Saugleistung führen kann. Besonders bevorzugt erfolgt die Lagerung des Luftführungsmittels und/oder der Siebstruktur durch ein Kugellager.

Bei der Verwendung eines Luftführungsmittels umfassend einen Apexkegel in einer Staubabscheideeinheit für einen Staubsauger zum Abreinigen einer Siebstruktur ist bevorzugt, dass der Apexkegel gleichzeitig dazu verwendet wird, Saugluft in ein Tauchrohr umzukehren. Dadurch kann die Strömungseigenschaft des Staubsaugers verbessert werden. Es ist also erreichbar, dass der Staubsauger eine bessere Staubsaugleistung aufweist und die Geräuschentwicklung des Staubsaugers reduziert wird, wenn durch den Apexkegel nicht nur die Siebstruktur abgereinigt wird, sondern auch noch die Strömungseigenschaft innerhalb der Staubabscheideeinheit verbessert wird.

### Kurzbeschreibung der Zeichnungen

Weitere vorteilhafte Ausgestaltungen der Erfindung werden nachfolgend anhand von in den Zeichnungen dargestellten Ausführungsbeispielen, auf welche die Erfindung jedoch nicht beschränkt ist, näher beschrieben.

Es zeigen schematisch:
- Fig. 1: ein Luftleitmittel einer erfindungsgemäßen Staubabscheideeinheit;
- Fig. 2: eine Siebstruktur einer erfindungsgemäßen Staubabscheideeinheit;
- Fig. 3: einen Längsschnitt durch Luftführungsmittel und Siebstruktur einer erfindungsgemäßen Staubabscheideeinheit, bei der ersichtlich wird, wie Luftführungsmittel und Siebstruktur zusammenwirken;
- Fig. 4: einen Querschnitt durch eine erfindungsgemäße Staubabscheideeinheit;
- Fig. 5: einen Längsschnitt durch eine erfindungsgemäße Staubabscheideeinheit, wobei die Siebstruktur gegenüber der Staubabscheideeinheit drehfest angeordnet ist; und
- Fig. 6: einen Längsschnitt durch eine erfindungsgemäße Staubabscheideeinheit, wobei die Siebstruktur gegenüber der Staubabscheideeinheit drehbar angeordnet ist.

### Detaillierte Beschreibung von Ausführungen der Erfindung

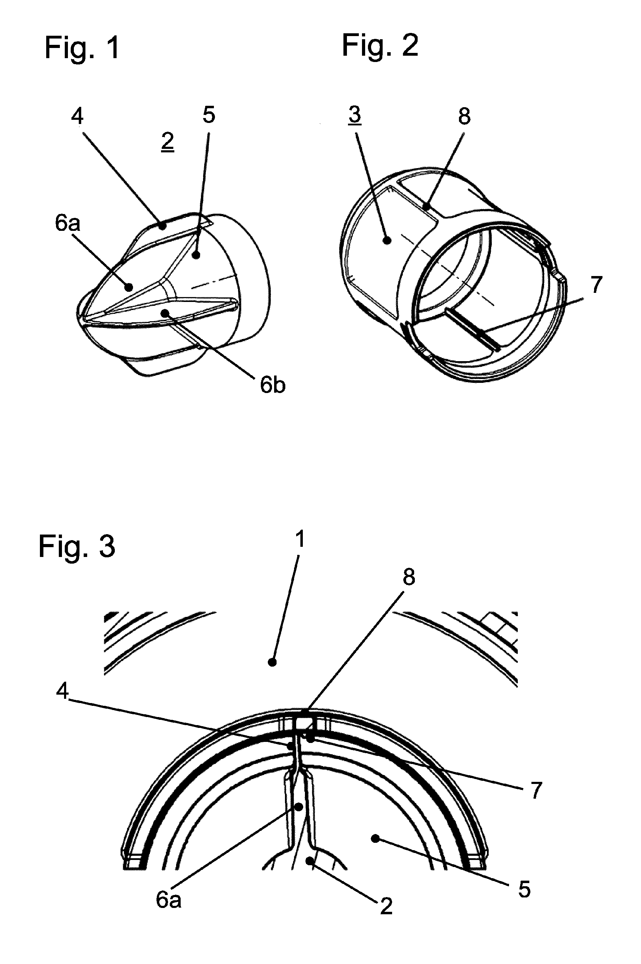

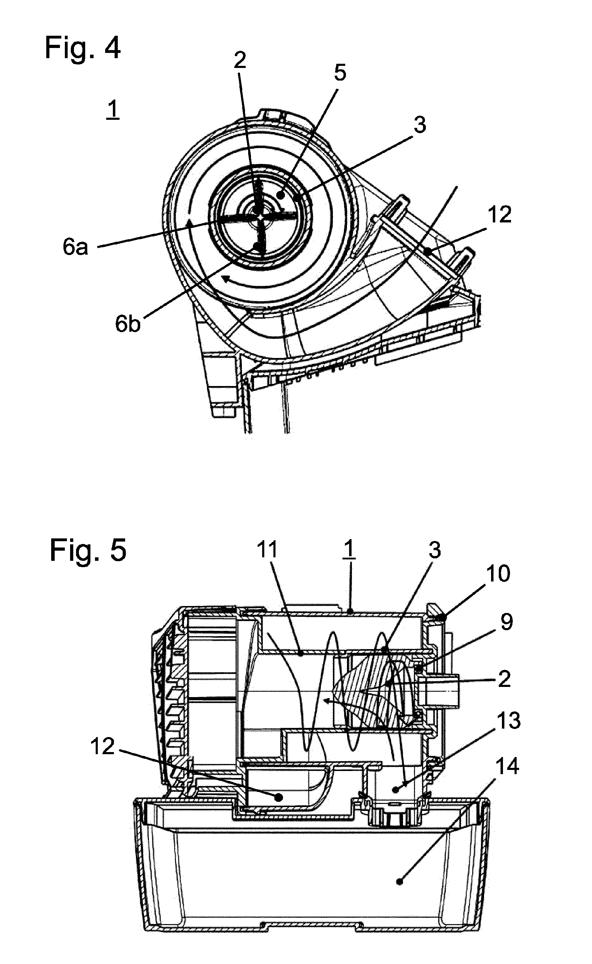

Die Figuren 1 bis 6 zeigen mögliche Ausführungsformen der Erfindung. Es ist jeweils eine erfindungsgemäße Staubabscheideeinheit (1) bzw. Teile dieser Staubabscheideeinheit (1) dargestellt. In einer erfindungsgemäßen Staubabscheideeinheit (1) ist in einer Ausführungsform ein Luftführungsmittel (2) vorhanden, das von einer Siebstruktur (3) koaxial umgeben ist und das mindestens ein Mittel (4) zum Abklopfen der Siebstruktur (3) aufweist. Dies ist besonders deutlich in den Figuren 1, 3 und 4 zu erkennen. Das Luftführungsmittel (2) umfasst einen Apexkegel (5). Der Apexkegel (5) wird parallel zu seiner Längsachse von zwei Luftleitflächen (6a, 6b) durchdrungen, die senkrecht zueinander angeordnet sind. An den Luftleitflächen (6a, 6b) stehen vier Mittel (4) zum Abklopfen der Siebstruktur (3) radial hervor. Sie müssen nicht in jeder Ausführungsform vorhanden sein, insbesondere nicht, wenn die Siebstruktur (3) nicht durch Abklopfen abgereinigt werden soll. Das Mittel (4) zum Abklopfen der Siebstruktur (3) ist im vorliegenden Fall ein Steg. Er ist einstückig mit dem Luftführungsmittel (2) verbunden. Wird das Luftführungsmittel (2) erfindungsgemäß von der in Fig. 2 gezeigten Siebstruktur (3) umgeben, indem diese einen dafür geeigneten Innenraum formt, so kann das Luftführungsmittel (2) mit der Siebstruktur (3) interagieren, wie in den Figuren 3 und 5 zu sehen ist. Wird nämlich das Luftführungsmittel (2) drehbar gegenüber der Staubabscheideeinheit (1) gelagert, wie in Fig. 5 verdeutlicht, so kann das Luftführungsmittel (2) die Siebstruktur (3) abklopfen um damit Staub von ihr zu lösen. Die Siebstruktur (3) ist in diesem Fall drehfest gegenüber der Staubabscheideeinheit (1) gelagert.

Um den Vorgang des Abklopfens wirkungsvoll gestalten zu können, umfasst die Siebstruktur (3) an ihrer inneren Umfangslinie mehrere Kontaktierungsmittel (7), die in den Innenraum der Siebstruktur (3) hineinreichen und lang genug sind, um mit den vier Mitteln (4) zum Abklopfen am Luftführungsmittel (2) wechselwirken zu können. Die gleichfalls vier Kontaktierungsmittel (7) sind ebenfalls stegförmig ausgeführt, wie in Fig. 2 zu erkennen ist, und sie sind auf Verstärkungsrippen (8) der Siebstruktur (3) angeordnet.

Unabhängig von der gewählten Ausführungsform ist die Siebstruktur (3) kreiszylindrisch rohrförmig geformt, was sich besonders günstig darauf auswirkt, das Luftführungsmittel (2) umgeben zu können. In der Staubabscheideeinheit (1) ist die Siebstruktur (3) gemeinsam mit dem Luftführungsmittel (2) über ein Kugellager (9) an einer abnehmbaren Verschlusskappe (10) der Staubabscheideeinheit (1) gelagert. Das andere Ende der Siebstruktur (3) ist an einem Tauchrohr (11) gelagert, das zur Luftausströmöffnung (nicht gezeigt) führt.

Wie in Fig. 4 schematisch verdeutlicht ist, versetzt in der dort gezeigten Ausführungsform ein Luftstrom, der durch eine Lufteinströmöffnung (12) in die Staubabscheideeinheit eintritt und durch einen Motor (nicht gezeigt), der eine Saugkraft entfaltet, in Richtung Luftausströmöffnung (nicht gezeigt) gesogen wird, das Luftführungsmittel (1) in Rotation gegenüber der Siebstruktur (3), die drehfest zur Staubabscheideeinheit (1) gelagert ist. Während des Rotierens berühren sich die Kontaktierungsmittel (7) der Siebstruktur (3) und die Mittel (4) zum Abklopfen der Siebstruktur (3), die am Luftführungsmittel (2) angeordnet sind, sodass die Siebstruktur (3) wie in Fig. 3 zu sehen ist beim Rotieren des Luftführungsmittels (2) in Vibration versetzt wird. Dadurch wird erreicht, dass die Siebstruktur (3) kontinuierlich von Staub abgereinigt wird. Dies ist schematisch in Fig. 5 gut zu erkennen, wo die Schraubenlinie die Trajektorie eines eingesaugten Staubteilchens verdeutlicht, die beim Durchlaufen der Staubabscheideeinheit (1) durch ein Auswurffenster (13) abgeschieden und in einem Staubsammelbehälter (15) abgelagert wird. Die gereinigte Luft wird anschließend durch das Luftführungsmittel (1) besonders günstig in das Tauchrohr (11) der Staubabscheideeinheit (1) hineingelenkt, zu erkennen an der geschwungenen Kurve, die in das Tauchrohr (11) einmündet. Somit erfüllt das Luftführungsmittel (1) nicht nur den Zweck, in dieser Ausführungsform die Siebstruktur (3) dadurch zu reinigen, dass es sie in Vibration versetzt, sondern sie lenkt die gereinigte Luft darüber hinaus in das Tauchrohr (11), sodass die Effizienz der Staubabscheideeinheit (1) verbessert wird.

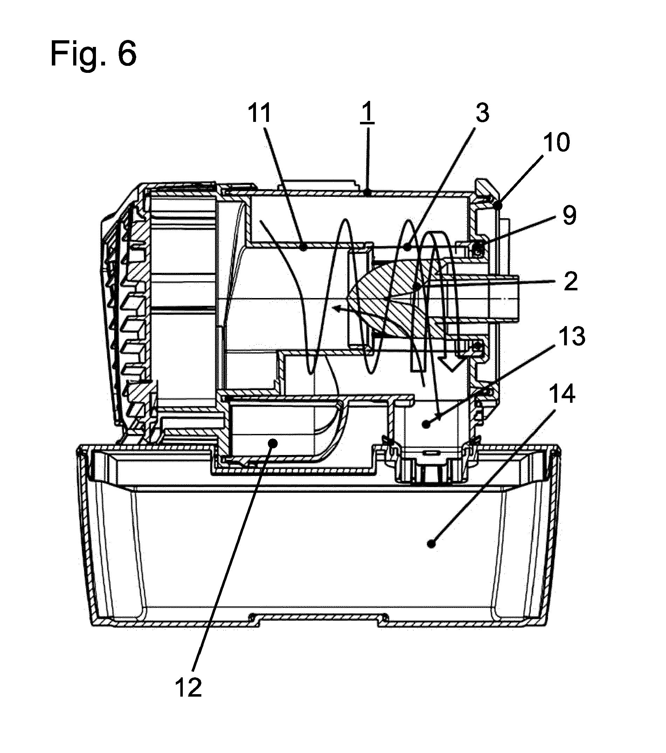

In einer anderen Ausführungsform ist wesentlich, dass die in den Fig. 1 und 2 gezeigten Luftführungsmittel (2) und Siebstruktur (3) drehfest zueinander und drehbar gegenüber der Staubabscheideeinheit (1) gelagert sind, wie in Fig. 6 zu erkennen ist. Beide Elemente sind in diesem Fall über ein Kugellager (9) drehbar gegenüber der Staubabscheideeinheit (1) gelagert. In diesem Fall versetzt das von Saugluft angetriebene Luftführungsmittel (2) die Siebstruktur (3) in Rotation. Luftführungsmittel (2) und Siebstruktur (3) rotieren aufgrund direkter mechanischer Kopplung mit gleicher Winkelgeschwindigkeit zu einander in die gleiche Drehrichtung, wodurch eine Zentrifugalkraft auf die Siebstruktur (3) wirkt, die die Siebstruktur (3) permanent von Stäuben reinigt. Die schraubenförmige Linie zeigt in Figur 6 erneut schematisch die Trajektorie eines eingesogenen Staubteilchens und die geschwungene Kurve die Bahn der ins Tauchrohr (11) eintretenden, gereinigten Luft. Damit das Luftführungsmittel (1) die Siebstruktur (3) in die beschriebene Form der Rotation versetzen kann, kann beispielsweise ein Kontaktierungsmittel (7) der Siebstruktur (3) einstückig mit einem Mittel (4) zum Abklopfen am Luftführungsmittel (2) verbunden sein. Das Mittel zum Abklopfen und das Kontaktierungsmittel können also in diesem Fall miteinander stoffschlüssig verbunden werden, so dass eine drehfeste Verbindung der beiden Elemente (2, 3) sichergestellt wäre. Gleichwertig wäre jede andere Konstruktion, die eine solche Rotation der beiden Teile (2, 3) bei gleichzeitiger Drehbarkeit gegenüber der Staubabscheideeinheit (1) sicherstellen kann.

Somit wird deutlich, dass die Siebstruktur (3) mit Hilfe des von ihr umgebenen Luftführungsmittels (2) entweder dadurch gereinigt werden kann, dass das Luftführungsmittel (2) drehbar gegenüber der Siebstruktur (3) angeordnet ist und dann die Siebstruktur (3) während der Rotation des Luftführungsmittels (2) abgeklopft wird, als auch dadurch, dass Luftführungsmittel (2) und Siebstruktur (3) drehfest zueinander gemeinsam rotieren können, sodass durch die Zentrifugalkraft, die dabei entsteht, die Siebstruktur (3) von Stäuben befreit wird. Dabei dient das Luftführungsmittel (2) jeweils auch dazu, die Saugluft in das Tauchrohr (11) der Staubabscheideeinheit (1) in Richtung der Luftausströmöffnung umzukehren.

### Bezugszeichenliste

- 1: Staubabscheideeinheit
- 2: Luftführungsmittel
- 3: Siebstruktur
- 4: Steg
- 5: Apexkegel
- 6a, 6b: Luftleitflächen
- 7: Kontaktierungsmittel
- 8: Verstärkungsrippen
- 9: Kugellager
- 10: Verschlusskappe
- 11: Tauchrohr
- 12: Lufteinströmöffnung
- 13: Auswurffenster
- 14: Staubsammelbehälter

## Patentansprüche

1. Staubabscheideeinheit (1) für einen Staubsauger, die eine Lufteinströmöffnung (12) und eine Luftausströmöffnung umfasst und die eine gegenüber der Staubabscheideeinheit (1) drehbar gelagerte Siebstruktur (3) zur Entfernung von Stäuben aus der eingeströmten Luft umfasst, wobei die Siebstruktur (3) einen Innenraum formt, und in dem Innenraum mindestens ein Luftführungsmittel (2) umgibt, das mit der Siebstruktur (3) rotationsgekoppelt ist, **dadurch gekennzeichnet, dass** das Luftführungsmittel (2) einen Apexkegel (5) umfasst.

2. Staubabscheideeinheit (1) nach Anspruch 1, **dadurch gekennzeichnet, dass** das Luftführungsmittel (2) mit Hilfe der Saugluft in eine Drehung um die eigene Längsachse versetzbar ist.

3. Staubabscheideeinheit (1) nach Anspruch 1 oder 2, **dadurch gekennzeichnet, dass** das Luftführungsmittel (2) eine Durchdringungsfigur ist, bei der der Apexkegel (5) von zwei Luftleitflächen (6a, 6b), die senkrecht zueinander angeordnet sind, parallel zu seiner Längsachse durchdrungen wird.

4. Staubabscheideeinheit (1) nach einem der vorherigen Ansprüche 1 bis 3, **dadurch gekennzeichnet, dass** die Siebstruktur (3) kreiszylindrisch-rohrförmig geformt ist.

5. Staubabscheideeinheit (1) nach einem der vorherigen Ansprüche, **dadurch gekennzeichnet, dass** die Siebstruktur (3) mit Verstärkungsrippen (8) versehen ist.

6. Staubabscheideeinheit (1) nach einem der vorherigen Ansprüche, **dadurch gekennzeichnet, dass** die Siebstruktur (3) an einem Tauchrohr (11) gelagert ist.

7. Staubabscheideeinheit (1) nach einem der vorherigen Ansprüche, **dadurch gekennzeichnet, dass** die Siebstruktur (3) an einer abnehmbaren Verschlusskappe (10) der Staubabscheideeinheit (1) gelagert ist.

8. Staubabscheideeinheit (1) nach einem der vorherigen Ansprüche, **dadurch gekennzeichnet, dass** die Siebstruktur (3) und der Apexkegel (5) am gleichen Ende der Staubabscheideeinheit (1) koaxial zu einander gelagert sind.

9. Staubabscheideeinheit (1) nach einem der vorherigen Ansprüche, **dadurch gekennzeichnet, dass** das Luftführungsmittel (2) mindestens ein Mittel (4) zum Abklopfen der Siebstruktur (3) aufweist.

10. Staubabscheideeinheit (1) nach Anspruch 9, **dadurch gekennzeichnet, dass** das mindestens eine Mittel (4) zum Abklopfen der Siebstruktur (3) radial aus dem Luftführungsmittel (2) hervorsteht.

11. Staubabscheideeinheit (1) nach Anspruch 9 oder 10, **dadurch gekennzeichnet, dass** das mindestens eine Mittel (4) zum Abklopfen der Siebstruktur (3) ein Steg ist.

12. Staubabscheideeinheit (1) nach Anspruch 11, **dadurch gekennzeichnet, dass** der Steg (4) einstückig mit dem Luftführungsmittel (2) verbunden ist.

13. Staubabscheideeinheit (1) nach einem der vorherigen Ansprüche, **dadurch gekennzeichnet, dass** die Siebstruktur (3) an ihrer inneren Umfangslinie mindestens ein Kontaktierungsmittel (7) aufweist, das in den Innenraum der Siebstruktur (3) hineinreicht.

14. Staubabscheideeinheit (1) nach Anspruch 13, **dadurch gekennzeichnet, dass** das mindestens eine Kontaktierungsmittel (7) der Siebstruktur (3) so lang ist, dass es das mindestens eine Mittel (4) des Luftleitmittels (2) zum Abklopfen der Siebstruktur (3) berühren kann.

15. Staubsauger mit einer Staubabscheideeinheit (1) nach einem der vorherigen Ansprüche.

16. Verfahren zum Abreinigen einer Siebstruktur (3) einer Staubabscheideeinheit (1) nach einem der vorherigen Ansprüche 1-14 , für einen Staubsauger, das den Schritt umfasst, ein Luftführungsmittel (2), umfassend einen Apexkegel (5), innerhalb der Siebstruktur (3) mittels vorbeiströmender Saugluft in Rotation gegenüber der Staubabscheideeinheit (1) zu versetzen.

17. Verwendung eines Luftführungsmittels (2), umfassend einen Apexkegel (5), in einer Staubabscheideeinheit (1) nach einem der vorherigen Ansprüche 1-14 für einen Staubsauger zum Abreinigen einer Siebstruktur (3), **dadurch gekennzeichnet, dass** der Apexkegel (5) gleichzeitig dazu verwendet wird, Saugluft in ein Tauchrohr (11) umzukehren.

## Claims

1. Dust extraction unit (1) for a vacuum cleaner, which comprises an air inflow opening (12) and an air outflow opening and which comprises a filter structure (3) rotatably mounted in respect of the dust extraction unit (1) for removing dust from the inflowing air, wherein the filter structure (3) forms an interior space, and in the interior space surrounds at least one air guidance means (2) which is rotationally coupled to the filter structure (3), **characterised in that** the air guidance means (2) comprises an apex cone (5).

2. Dust extraction unit (1) according to claim 1, **characterised in that** the air guidance means (2) can be set into rotation about its own longitudinal axis with the help of the suction air.

3. Dust extraction unit (1) according to claim 1 or 2, **characterised in that** the air guidance means (2) is a penetration figure, in which the apex cone (5) of two air guidance surfaces (6a, 6b) which are arranged perpendicular to one another is penetrated parallel to its longitudinal axis.

4. Dust extraction unit (1) according to one of the preceding claims 1 to 3, **characterised in that** the filter structure (3) is shaped so as to be tubular with constant radius.

5. Dust extraction unit (1) according to one of the preceding claims, **characterised in that** the filter structure (3) is provided with reinforcing ribs (8).

6. Dust extraction unit (1) according to one of the preceding claims, **characterised in that** the filter structure (3) is mounted on an immersion tube (11).

7. Dust extraction unit (1) according to one of the preceding claims, **characterised in that** the filter structure (3) is mounted on a removable locking cap (10) of the dust extraction unit (1).

8. Dust extraction unit (1) according to one of the preceding claims, **characterised in that** the filter structure (3) and the apex cone (5) are mounted coaxially to one another at the same end of the dust extraction unit (1).

9. Dust extraction unit (1) according to one of the preceding claims, **characterised in that** the air guidance means (2) has at least one means (4) for tapping the filter structure (3).

10. Dust extraction unit (1) according to claim 9, **characterised in that** the at least one means (4) for tapping the filter structure (3) projects radially out of the air guidance means (2).

11. Dust extraction unit (1) according to claim 9 or 10, **characterised in that** the at least one means (4) for tapping the filter structure (3) is a web.

12. Dust extraction unit (1) according to claim 11, **characterised in that** the web (4) is integrally connected to the air guidance means (2).

13. Dust extraction unit (1) according to one of the preceding claims, **characterised in that** the filter structure (3) has on its interior circumferential line at least one contacting means (7) which extends into the interior space of the filter structure (3).

14. Dust extraction unit (1) according to claim 13, **characterised in that** the at least one contacting means (7) of the filter structure (3) is long enough to touch the at least one means (4) of the air conducting means (2) for tapping the filter structure (3).

15. Vacuum cleaner having a dust extraction unit (1) according to one of the preceding claims.

16. Method for cleaning a filter structure (3) of a dust extraction unit (1) according to one of the previous claims 1-14 for a vacuum cleaner, comprising the step of setting an air guidance means (2), comprising an apex cone (5), inside the filter structure (3), into rotation in respect of the dust extraction unit (1) by means of air flowing past.

17. Use of an air guidance means (2), comprising an apex cone (5), in a dust extraction unit (1) according to one of the preceding claims 1-14 for a vacuum cleaner for cleaning a filter structure (3), **characterised in that** the apex cone (5) is simultaneously used to reverse suction air into an immersion tube (11).

## Revendications

1. Unité de dépoussiérage (1) pour un aspirateur, laquelle comprend un orifice d'entrée d'air (12) et un orifice de sortie d'air et laquelle comprend une structure en tamis (3) logée de manière rotative par rapport à l'unité de dépoussiérage (1), destinée à retirer les poussières hors de l'air introduit, la structure en tamis (3) formant un espace intérieur et entourant dans l'espace intérieur au moins un moyen d'amenée d'air (2) qui est couplé en rotation avec la structure en tamis (3), **caractérisée en ce que** le moyen d'amenée d'air (2) comprend un cône apex (5).

2. Unité de dépoussiérage (1) selon la revendication 1, **caractérisée en ce que** le moyen d'amenée d'air (2) peut être tourné d'une rotation autour de son propre axe longitudinal à l'aide de l'air aspiré.

3. Unité de dépoussiérage (1) selon la revendication 1 ou 2, **caractérisée en ce que** le moyen d'amenée d'air (2) est une figure de pénétration, dans laquelle le cône apex (5) est traversé parallèlement à son axe longitudinal par deux surfaces de guidage d'air (6a, 6b) qui sont disposées perpendiculairement l'une par rapport à l'autre.

4. Unité de dépoussiérage (1) selon l'une quelconque des revendications 1 à 3, **caractérisée en ce que** la structure en tamis (3) est réalisée en forme de tube cylindrique circulaire.

5. Unité de dépoussiérage (1) selon l'une quelconque des revendications précédentes, **caractérisée en ce que** la structure en tamis (3) est munie de nervures de renforcement (8).

6. Unité de dépoussiérage (1) selon l'une quelconque des revendications précédentes, **caractérisée en ce que** la structure en tamis (3) est logée sur un tube plongeur (11).

7. Unité de dépoussiérage (1) selon l'une quelconque des revendications précédentes, **caractérisée en ce que** la structure en tamis (3) est logée sur un capuchon de fermeture amovible (10) de l'unité de dépoussiérage (1).

8. Unité de dépoussiérage (1) selon l'une quelconque des revendications précédentes, **caractérisée en ce que** la structure en tamis (3) et le cône apex (5) sont logés de manière coaxiale l'un par rapport à l'autre sur la même extrémité de l'unité de dépoussiérage (1).

9. Unité de dépoussiérage (1) selon l'une quelconque des revendications précédentes, **caractérisée en ce que** le moyen d'amenée d'air (2) présente au moins un moyen (4) destiné au tapotage de la structure en tamis (3).

10. Unité de dépoussiérage (1) selon la revendication 9, **caractérisée en ce que** l'au moins un moyen (4) destiné au tapotage de la structure en tamis (3) fait saillie radialement hors du moyen d'amenée d'air (2).

11. Unité de dépoussiérage (1) selon la revendication 9 ou 10, **caractérisée en ce que** l'au moins un moyen (4) destiné au tapotage de la structure en tamis (3) est une nervure.

12. Unité de dépoussiérage (1) selon la revendication 11, **caractérisée en ce que** la nervure (4) est reliée d'une seule pièce avec le moyen d'amenée d'air (2).

13. Unité de dépoussiérage (1) selon l'une quelconque des revendications précédentes, **caractérisée en ce que** la structure en tamis (3) présente sur sa ligne circonférentielle intérieure au moins un moyen de mise en contact (7) qui fait saillie dans l'espace intérieur de la structure en tamis (3).

14. Unité de dépoussiérage (1) selon la revendication 13, **caractérisée en ce que** l'au moins un moyen de mise en contact (7) de la structure en tamis (3) est de telle longueur qu'il puisse toucher l'au moins un moyen (4) du moyen d'amenée d'air (2) destiné au tapotage de la structure en tamis (3).

15. Aspirateur comprenant une unité de dépoussiérage (1) selon l'une quelconque des revendications précédentes.

16. Procédé de nettoyage d'une structure en tamis (3) d'une unité de dépoussiérage (1) selon l'une quelconque des revendications précédentes 1 à 14 pour un aspirateur, qui comprend l'étape de mettre en rotation par rapport à l'unité de dépoussiérage (1), à l'intérieur de la structure en tamis (3) au moyen d'air aspiré passant devant, un moyen d'amenée d'air (2) comprenant un cône apex (5).

17. Utilisation d'un moyen d'amenée d'air (2) comprenant un cône apex (5) dans une unité de dépoussiérage (1) selon l'une quelconque des revendications précédentes 1 à 14 pour un aspirateur, destiné à nettoyer une structure en tamis (3), **caractérisée en ce que** le cône apex (5) est simultanément utilisé pour faire retourner de l'air aspiré dans un tube plongeur (11).
